(19) Europäisches Patentamt / European Patent Office / Office européen des brevets

(11) **EP 3 992 171 A1**

(12) **EUROPEAN PATENT APPLICATION**
published in accordance with Art. 153(4) EPC

(43) Date of publication:
**04.05.2022 Bulletin 2022/18**

(21) Application number: **20832440.0**

(22) Date of filing: **21.04.2020**

(51) International Patent Classification (IPC):
**C04B 38/06** (2006.01)     **C04B 35/524** (2006.01)
**C01B 32/05** (2017.01)

(52) Cooperative Patent Classification (CPC):
**C01B 32/05; C04B 35/524; C04B 38/06**

(86) International application number:
**PCT/JP2020/017255**

(87) International publication number:
**WO 2020/261735 (30.12.2020 Gazette 2020/53)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.06.2019 JP 2019121941**

(71) Applicant: **Mitsubishi Pencil Company, Limited
Tokyo 140-8537 (JP)**

(72) Inventors:
• **YAMADA, Kunitaka**
  **Fujioka-shi, Gunma 375-8501 (JP)**
• **KOYAMA, Takao**
  **Fujioka-shi, Gunma 375-8501 (JP)**

(74) Representative: **Vossius & Partner
Patentanwälte Rechtsanwälte mbB
Siebertstraße 3
81675 München (DE)**

(54) **GLASSY CARBON COMPACT**

(57)     A glassy carbon compact according to the present invention has a maximum inscribed sphere diameter of 5 mm or greater, comprises pores having diameters of 500 nm or less dispersed throughout the glassy carbon compact, and has a density of 1.1 g/cm$^3$ or greater.

**EP 3 992 171 A1**

**Description**

FIELD

The present invention relates to a glassy carbon shaped body (compact) that can be utilized for various applications requiring thickness, and a method for manufacturing the glassy carbon shaped body.

BACKGROUND

Conventionally, glassy carbon (vitreous carbon, amorphous carbon) having a very homogeneous and dense glassy structure, obtained by carbonizing and baking a curable resin, is widely used. Such a carbon material has excellent features such as no shedding of constituent particles and impermeability, in addition to properties such as electrical conductivity, chemical stability, heat resistance, and high purity, which are features of general carbon materials. Glassy carbon utilizing these features is used in, for example, jigs, containers, and semiconductor manufacturing equipment members.

PTL 1 discloses a carbonaceous porous body characterized in that it comprises an amorphous carbon component as a skeletal material; and a carbon powder in an amount of 0 to 50 weight% in the structure thereof, and having a bulk density of 0.3 to 1.3 g/cm$^3$.

PTL 2 discloses a carbonaceous porous body characterized in that it comprises amorphous carbon as a skeletal material and having a bulk density of 0.3 to 1.0 g/cm$^3$, wherein the ratio of voids in the surface portion thereof is smaller than that in the central portion.

PTL 3 discloses a method for manufacturing a glassy carbon material by curing a curable resin and baking the obtained cured resin, wherein a thermoplastic phenolic resin is dissolved in the curable resin before the curable resin is cured.

PTL 4 discloses a method for manufacturing a glassy carbon material, in which a thermosetting resin is carbonized by baking at a temperature of 800 °C or higher in an inert atmosphere, wherein the thermosetting resin is capable of containing water in an amount of 20 weight% or greater in a state of an initial condensate before curing, and wherein the thermosetting resin has a predetermined composition and viscosity.

[CITATION LIST]

[PATENT LITERATURE]

[PTL 1] JP 2003-128475
[PTL 2] JP 2003-165784
[PTL 3] JP H10-152310
[PTL 4] JP S63-44684

SUMMARY

[TECHNICAL PROBLEM]

In recent years, there has been a need for a glassy carbon shaped body having a large size and high mechanical strength, for example, in the case of a glassy carbon plate, a glassy carbon shaped body having a large thickness and high mechanical strength. However, when a glassy carbon shaped body is manufactured by a conventional method, there are issues such as cracking during carbonization and low strength of the obtained glassy carbon compact.

Therefore, there is a need to provide a glassy carbon shaped body having a large size and high mechanical strength.

[SOLUTION TO PROBLEM]

The present inventors have intensively studied and consequently discovered that the above object can be achieved by the following means, and have thus completed the present invention. The present invention is described as follows:

«Aspect 1» A glassy carbon shaped body having:

a maximum inscribed sphere diameter of 5 mm or more,
pores having a diameter of 500 nm or less dispersed in the glassy carbon shaped body, and a density of 1.1 g/cm$^3$ or higher.

«Aspect 2» The glassy carbon shaped body according to Aspect 1, wherein it has an acoustic impedance of 2 to 6 Mrayl.

«Aspect 3» The glassy carbon shaped body according to Aspect 1 or 2, wherein the pores have a diameter within a range of more than 0 nm to 300 nm.

«Aspect 4» The glassy carbon shaped body according to any one of Aspects 1 to 3, wherein it further contains a carbonaceous powder dispersed in the glassy carbon shaped body.

«Aspect 5» The glassy carbon shaped body according to any one of Aspects 1 to 4, wherein it has a flexural strength of 50 to 250 MPa in accordance with JIS K 7074.

«Aspect 6» The glassy carbon shaped body according to any one of Aspects 1 to 5, wherein it has a flexural modulus of 10 to 35 GPa in accordance with JIS K 7074.

«Aspect 7» A method for manufacturing the glassy carbon shaped body of any one of Aspects 1 to 6, comprising

compatibilizing a curable resin, a dissipatable substance, and a solvent by mixing to prepare a precursor composition, and

heat-treating the precursor composition in a non-oxidizing atmosphere, whereby the curable resin is carbonized to form a main body of the glassy carbon shaped body and the dissipatable substance is dissipated to form the pores of the glassy carbon shaped body.

«Aspect 8» The method for manufacturing a glassy carbon shaped body according to Aspect 7, wherein a content ratio of the dissipatable substance based on the weight of solid content of the precursor composition is greater than 0 weight% to 30 weight%.

«Aspect 9» The method for manufacturing a glassy carbon shaped body according to Aspect 7 or 8, wherein the dissipatable substance has a pyrolysis temperature of 300 °C to 500 °C.

<<Aspect 10>> The method for manufacturing a glassy carbon shaped body according to any one of Aspects 7 to 9, wherein a carbonaceous powder is further contained in the precursor composition.

«Aspect 11» The method for manufacturing a glassy carbon shaped body according to any one of Aspects 7 to 10, wherein the solvent has a boiling point of 150 °C or higher.

[ADVANTAGEOUS EFFECTS OF INVENTION]

According to the present invention, a glassy carbon shaped body having a large size and high mechanical strength can be provided.

DESCRIPTION OF EMBODIMENTS

«Glassy carbon shaped body»

The glassy carbon shaped body of the present invention is a glassy carbon shaped body having a maximum inscribed sphere diameter of 5 mm or more, pores having a diameter of 500 nm or less dispersed in the glassy carbon shaped body, and a density of 1.1 g/cm$^3$ or higher.

According to the above configuration, a glassy carbon shaped body having high mechanical strength can be obtained due to the presence of pores having a diameter of 500 nm or less and a high density, despite of having a large size.

In the present specification, the phrase "glassy carbon shaped body" means, for example, that glassy carbon occupies 50 volume% or greater, 60 volume% or greater, 70 volume% or greater, 80 volume% or greater, or 90 volume% or greater, and 100 volume% or less, 98 volume% or less, or 95 volume% or less of a shaped body. Preferably, the glassy carbon shaped body is made of glassy carbon and carbonaceous powder dispersed in the glassy carbon in an amount of 90 volume% or greater, 95 volume% or greater, or 98 volume% or greater.

A large maximum inscribed sphere diameter in a glassy carbon shaped body means that the glassy carbon shaped body has a large size. The value thereof can be 5 mm or more, 7 mm or more, 10 mm or more, 13 mm or more, 15 mm or more, 18 mm or more, or 20 mm or more, and can be 100 mm or less, 90 mm or less, 80 mm or less, 70 mm or less, 60 mm or less, 50 mm or less, 40 mm or less, 35 mm or less, 30 mm or less, or 25 mm or less.

The density of the glassy carbon shaped body may be 1.1 g/cm$^3$ or higher or 1.2 g/cm$^3$ or higher, and may be 1.8 g/cm$^3$ or lower, 1.7 g/cm$^3$ or lower, 1.6 g/cm$^3$ or lower, 1.5 g/cm$^3$ or lower, 1.4 g/cm$^3$ or lower, or 1.3 g/cm$^3$ or lower. The density may be measured in accordance with JIS Z 8807.

The glassy carbon shaped body of the present invention may be, for example, a carbon block or a carbon plate. Particularly, when the glassy carbon shaped body of the present invention is a carbon plate, the above maximum inscribed sphere diameter is the thickness of the thickest portion in the carbon plate.

The acoustic impedance of the glassy carbon shaped body of the present invention is preferably 2 Mrayl or greater or 3 Mrayl or greater from the viewpoint of increasing the mechanical strength of the glassy carbon shaped body. The acoustic impedance can be 6 Mrayl or less, 5 Mrayl or less, or 4 Mrayl or less.

The above acoustic impedance is determined by the following formula (1):

$$\text{Acoustic impedance } (Z: \text{Mrayl}) = \text{density } (\rho: \text{g/cm}^3) \times \text{acoustic speed } (C: \text{m/sec})/10^3 \qquad (1).$$

The above acoustic speed may be measured in accordance with, for example, JIS Z 2353-2003.

The above acoustic impedance can be adjusted by, for example, adjusting the type and content of the carbonaceous powder or the type and content of the dissipatable substance in the method for manufacturing a glassy carbon shaped body mentioned below.

The pore diameter of the glassy carbon shaped body of the present invention is preferably more than 0 nm, 1 nm or more, 3 nm or more, 5 nm or more, 8 nm or more, 10 nm or more, 15 nm or more, 20 nm or more, 30 nm or more, 40 nm or more, 50 nm or more, 60 nm or more, 70 nm or more, 80 nm or more, or 90 nm or more from the viewpoint of facilitating degassing of pyrolysis gas generated in the carbonization process and facilitating manufacturing. The pore diameter is preferably 500 nm or less, 450 nm or less, 400 nm or less, 350 nm or less, 300 nm or less, 250 nm or less, 220 nm or less, 200 nm or less, 180 nm or less, 150 nm or less, 130 nm or less, or 110 nm or less from the viewpoint of not excessively reducing the density of the glassy carbon shaped body, and consequently, ensuring good mechanical strength. The pore diameter may be an average diameter measured by, for example, an image analysis method via a scanning electron microscope (SEM), an X-ray CT method, or a gas absorption method.

The flexural strength, in accordance with JIS K 7074, of the glassy carbon shaped body having the above composition can be 50 MPa or greater, 60 MPa or greater, 70 MPa or greater, 80 MPa or greater, 90 MPa or greater, 100 MPa or greater, or 110 MPa or greater. Further, the flexural strength can be 250 MPa or less, 240 MPa or less, 230 MPa or less, 220 MPa or less, 210 MPa or less, 200 MPa or less, 190 MPa or less, 180 MPa or less, 160 MPa or less, 150 MPa or less, 140 MPa or less, or 130 MPa or less.

The flexural strength is measured in accordance with JIS K 7074. Specifically, a load (three-point bending) is applied to one point of a test piece simply supported on both ends, and the test piece is deflected at a predetermined test speed to obtain the load at fracture or the maximum load, either of which is used to determine the flexural strength $\sigma_b$ (MPa) by the following formula:

$$\sigma_b = (3P_bL)/(2bh^2)$$

wherein L is the distance (mm) between points of support, b is the width (mm) of the test piece, h is the thickness (mm) of the test piece, and $P_b$ is the load at fracture or the maximum load (N). It should be noted that the test piece can be cut into any size for measurement.

The flexural modulus, in accordance with JIS K 7074, of the glassy carbon shaped body having the above composition can be 10 GPa or greater, 11 GPa or greater, 12 GPa or greater, 13 GPa or greater, 14 GPa or greater, 15 GPa or greater, 16 GPa or greater, or 17 GPa or greater. Further, the flexural modulus can be 35 GPa or less, 33 GPa or less, 30 GPa or less, 29 GPa or less, or 28 GPa or less.

The flexural modulus is measured in accordance with JIS K 7074. Specifically, a load (three-point bending) is applied to one point of a test piece simply supported on both ends, and the test piece is deflected at a predetermined test speed to record a load-deflection curve. Using the initial slope of the linear portion of the load-deflection curve, the flexural modulus $E_b$ (GPa) is determined by the following formula:

$$E_b = (1/4) \times (L^3/bh^3) \times (P/\delta)$$

wherein L is the distance (mm) between points of support, b is the width (mm) of the test piece, h is the thickness (mm) of the test piece, and $P/\delta$ is the slope (N/mm) of the linear portion of the load-deflection curve. It should be noted that the test piece can be cut into any size for measurement.

The glassy carbon shaped body of the present invention may further contain a carbonaceous powder dispersed in the glassy carbon.

Hereinafter, each constituent element of the glassy carbon shaped body of the present invention will be described.

<Glassy carbon>

The glassy carbon can be obtained by, for example, carbonizing a precursor composition containing a curable resin, a dissipatable substance, and a solvent. A method for manufacturing the glassy carbon shaped body will be described in detail.

<Carbonaceous powder>

The carbonaceous powder may be a carbon powder dispersed in glassy carbon.

Examples of the carbon particles include a non-crystalline carbon powder, graphene, carbon nanotube, graphite, and carbon black. These may be used alone or in combination.

The shape of the carbon particles is not particularly limited, and may be, for example, planar, array-like, or spherical.

The average particle size of the carbon particles can be 10 nm or more, 20 nm or more, 30 nm or more, 50 nm or more, 70 nm or more, 100 nm or more, 200 nm or more, 300 nm or more, 500 nm or more, 700 nm or more, 1 $\mu$m or more, 2 $\mu$m or more, or 3 $\mu$m or more, and can be 20 $\mu$m or less, 18 $\mu$m or less, 15 $\mu$m or less, 13 $\mu$m or less, 10 $\mu$m or less, or 7 $\mu$m or less. In the present specification, the average particle size refers to the median diameter (D50) calculated based on volume in a laser diffraction method. By having the average particle size of the carbon particles at 10 nm or more, dispersion is easily carried out and thickening is suppressed. As a result, filling of a mold and defoaming treatment can be easily carried out. By having the average particle size of the carbon particles at 20 $\mu$m or less, precipitation of the carbon particles is suppressed. As a result, dispersion can be easily carried out.

The content ratio of the carbonaceous powder in the glassy carbon shaped body, based on the weight of the entire glassy carbon shaped body, can be 50 weight% or less, 45 weight% or less, 40 weight% or less, 35 weight% or less, 30 weight% or less, 25 weight% or less, 20 weight% or less, or 15 weight% or less, and can be 5 weight% or greater, 7 weight% or greater, or 10 weight% or greater. By having the content ratio of the carbonaceous powder at 50 weight% or less, the glassy carbon shaped body can be easily molded. By having the content ratio of the carbonaceous powder at 5 weight% or greater, good mechanical properties of the glassy carbon shaped body can be ensured.

<<Method for manufacturing glassy carbon shaped body >>

The method of the present invention for manufacturing a glassy carbon shaped body comprises the following:

compatibilizing a curable resin, a dissipatable substance, and a solvent by mixing to prepare a precursor composition, and
heat-treating the precursor composition in a non-oxidizing atmosphere, whereby the curable resin is carbonized to form a main body of the glassy carbon shaped body and the dissipatable substance is dissipated to form the pores of the glassy carbon shaped body.

Conventionally, when manufacturing a glassy carbon shaped body having a maximum inscribed sphere diameter of 5 mm or more, since a large amount of low molecular weight substance is generated at the curing stage or the initial carbonization stage, the volume thereof contracts significantly and a gas consisting of this low molecular weight substance is accumulated in the interior, whereby the issue of cracking is likely to occur. The larger the maximum inscribed sphere diameter of a glassy carbon shaped body to be prepared, the more gas generated at a location far (deep) from the surface of the shaped body, whereby the contraction in volume and the amount of gas generated are large. As a result, stress applied to the carbon precursor at the carbonization stage becomes large, and cracking is likely to occur.

The present inventors have discovered that a glassy carbon shaped body have a maximum inscribed sphere diameter of 5 mm or more can be manufactured according to the above method. Specifically, due to the compatibility of the curable resin, the dissipatable substance, and the solvent, paths that allow gas to escape from the interior of the carbon precursor can be formed evenly in the entire carbon precursor. As a result, the stress associated with accumulation of gas can be satisfactorily suppressed, and the above glassy carbon shaped body can be manufactured without cracking.

The density of the glassy carbon shaped body manufactured as described above can be 1.1 g/cm$^3$ or higher or 1.2 g/cm$^3$ or higher, and can be 1.8 g/cm$^3$ or lower, 1.7 g/cm$^3$ or lower, 1.6 g/cm$^3$ or lower, 1.5 g/cm$^3$ or lower, 1.4 g/cm$^3$ or lower, or 1.3 g/cm$^3$ or lower.

The method of the present invention may further comprise molding a precursor composition by charging the precursor composition in a mold and curing it.

<Preparation of precursor composition>

A curable resin, a dissipatable substance, and a solvent are compatibilized by mixing to prepare the precursor composition.

The mixing can be carried out with a known stirring means such as a Disper.

A carbonaceous powder may be further added into the precursor composition. The carbonaceous powder may be added together with the curable resin, dissipatable substance, and solvent, or may be added after the mixture thereof.

<Molding of precursor composition>

The precursor composition can be molded by charging in a mold the precursor composition and curing it.

<Heat treatment of precursor composition>

For the heat treatment of the precursor composition, the precursor composition is heat-treated under a non-oxidizing atmosphere, whereby the curable resin is carbonized to form a main body of the glassy carbon shaped body and the dissipatable substance is dissipated to form the pores of the glassy carbon shaped body.

The heat treatment can be carried out by raising the temperature to, for example, 800 °C or higher, 850 °C or higher, or 900 °C or higher, and 3000 °C or lower, 2800 °C or lower, 2500 °C or lower, 2200 °C or lower, 2000 °C or lower, 1800 °C or lower, 1600 °C or lower, 1500 °C or lower, 1400 °C or lower, 1300 °C or lower, 1200 °C or lower, 1150 °C or lower, 1100 °C or lower, 1050 °C or lower, or 1000 °C or lower.

Hereinafter, the components used in the method of the present invention for manufacturing the glassy carbon shaped body will be described.

(Curable resin)

The curable resin is generally a resin that can be three-dimensionally crosslinked and cured. Particularly, as the curable resin of the present invention, it is preferable to use a curable resin that can be carbonized without undergoing pyrolysis when heated to 1000 °C under a non-oxidizing atmosphere and has a carbonization yield of 40% or higher.

As the curable resin, a curing precursor, for example, a furan resin, a phenolic resin, an epoxy resin, a furan-phenol based resin, a phenol-modified furan co-condensate, a melamine resin, a urea resin, or a furan-urea based resin, can be used alone or in combination of two or more.

(Curing agent)

For example, when a furan resin, a phenol-furan based resin, or a furan-urea based resin is used as the curable resin, an organic sulfonic acid-based resin such as p-toluenesulfonic acid can be used as the curing agent.

(Dissipatable substance)

The dissipatable substance is a substance, particularly an organic substance, that can be dissipated by pyrolysis at a given pyrolysis temperature.

The pyrolysis temperature can be determined by TG measurement at a temperature increase rate of 10 °C/min under a nitrogen atmosphere. Specifically, at the weight loss ratio W (%) in each measurement temperature T, the peak temperature of dW/dT when the dW/dT at each temperature is determined and plotted at each temperature can be considered as the pyrolysis temperature of the substance.

The pyrolysis temperature of the dissipatable substance is preferably lower than the temperature at which the above curable resin is carbonized, and is, for example, 500 °C or lower, 480 °C or lower, 450 °C or lower, or 420 °C or lower. By having the pyrolysis temperature at the above temperatures, paths for venting a gas consisting of a low molecular weight substance generated in the carbonization temperature region of the curable resin can be satisfactory constructed.

The pyrolysis temperature is preferably 300 °C or higher, 320 °C or higher, 350 °C or higher, or 380 °C or higher. By having the pyrolysis temperature at 300 °C or higher, the rapid contraction of the precursor composition due to the generation of a large amount of low molecular weight substance at an initial temperature of carbonization is suppressed. As a result, closure of the above paths can be inhibited.

As the dissipatable substance, for example, polyvinyl butyral (PVB), polyvinyl pyrrolidone, or polyethylene glycol can be used.

Particularly, when polyethylene glycol is used as the dissipatable substance, the molecular weight of the dissipatable substance is preferably 400 or higher, 600 or higher, 800 or higher, 1000 or higher, 3000 or higher, 5000 or higher, 8000 or higher, 10000 or higher, 12000 or higher, 14000 or higher, or 17000 or higher, and 100000 or lower, 90000 or lower, 80000 or lower, 70000 or lower, 60000 or lower, 50000 or lower, 45000 or lower, 40000 or lower, 35000 or lower, 30000 or lower, or 25000 or lower from the viewpoint of setting the pyrolysis temperature within the above range. When a mixture of dissipatable substances having different molecular weights is used, a weighted average of the molecular weights, weighted by the content ratio of each component, may be within the above range.

The content ratio of the dissipatable substance based on the weight of solid content of the precursor composition is preferably greater than 0 weight%, 1 weight% or greater, 2 weight% or greater, 3 weight% or greater, or 4 weight% or greater from the viewpoint of satisfactorily forming the above paths, and is preferably 10 weight% or less, 9 weight% or less, 8 weight% or less, 7 weight% or less, 6 weight% or less, or 5 weight% or less from the viewpoint of improving the mechanical strength of the glassy carbon shaped body. The phrase "weight of solid content of the precursor composition" refers to the total weight of the curable resin and the dissipatable substance.

(Solvent)

The solvent of the present invention is a solvent that is compatible with a curable resin and a dissipatable substance. In the present specification, the term "compatible" refers to a state in which undissolved material cannot be confirmed when the precursor composition before curing and before the addition of a carbonaceous powder is observed with an optical microscope at 100 times magnification or higher.

The boiling point of the solvent is preferably 150 °C or higher, from the viewpoint of maintaining compatibility with the dissipatable substance for a long period of time, and consequently, satisfactorily forming paths. The boiling point may be 150 °C or higher, 160 °C or higher, 170 °C or higher, 180 °C or higher, 190 °C or higher, or 200 °C or higher, and may be 300 °C or lower, 280 °C or lower, and 250 °C or lower.

Examples of the solvent include alcohols such as benzyl alcohol; aprotic polar solvents such as N-methyl-2-pyrrolidone (NMP), dimethylsulfoxide (DMSO), 1,3-dimethyl-2-imidazolidinone (DMI), N,N-dimethylformamide (DMF), and N,N-dimethylacetamide (DMAC); glycol-based solvents such as propylene glycol, triethylene glycol, tetraethylene glycol, and polyethylene glycol having a molecular weight of 600 or lower; and glycol ethers such as 3-methoxy-3-methyl-1-butanol (Solfit). These may be used alone or as a mixture of two or more.

As a combination of curable resin / pyrolytic organic substance / solvent which satisfies the conditions for the above solubility parameters, for example, the following combinations can be used:
furan resin / polyethylene glycol / benzyl alcohol + tetraethylene glycol, furan resin / polyethylene glycol / benzyl alcohol + triethylene glycol, furan resin / polyethylene glycol / benzyl alcohol + diethylene glycol, furan resin / polyvinyl pyrrolidone / benzyl alcohol + tetraethylene glycol, phenolic resin / polyethylene glycol + PVB / tetraethylene glycol + benzyl alcohol, and furan resin / polyethylene glycol / NMP

The above combinations are examples. Any combination having uniform compatibility can be used.

EXAMPLES

The present invention will be specifically described with reference to the Examples and Comparative Examples. However, the present invention is not limited thereto.

<<Example 1>>

120 weight parts of a furan resin (VF303, Hitachi Chemical Co., Ltd.) as the curable resin, 14 weight parts of polyethylene glycol (PEG) (pyrolysis temperature of 426 °C) having a molecular weight of 11000 as the dissipatable substance, and 26 weight parts of benzyl alcohol (BA) (boiling point of 205 °C) and 40 weight parts of tetraethylene glycol (TEG) (boiling point of 328 °C) as the solvent were blended and stirred well with, for example, a Disper to obtain a uniform solution. The content ratio of the dissipatable substance based on the weight of solid content of the precursor composition was 10 weight%.

2 weight parts of p-toluenesulfonic acid (PTS) as the curing agent were added into the obtained solution, which was further stirred and homogenized, and thereafter subjected to a defoaming treatment under reduced pressure to obtain a precursor composition. The precursor composition was filled into a mold having a diameter of 100 mm and a thickness of 25 mm and cured. The cured precursor composition was removed from the mold and heat-treated to a temperature of 1000 °C under a nitrogen gas atmosphere to obtain a glassy carbon shaped body having a diameter of 80 mm and a thickness of 20 mm.

The obtained glassy carbon shaped body, measured by an image analysis method via SEM, was a glassy carbon shaped body having a pore diameter of approximately 50 nm, a flexural strength of 80 MPa, a flexural modulus of 19 GPa, and an acoustic impedance of 4.5 Mrayl.

<<Example 2>>

126 weight parts of a furan resin (VF303, Hitachi Chemical Co., Ltd.) as the curable resin, 10 weight parts of polyethylene glycol (pyrolysis temperature of 426 °C) having a molecular weight of 20000 as the pyrolytic organic substance, and 20 weight parts of Solfit (boiling point of 174 °C) and 30 weight parts of triethylene glycol (TrEG) (boiling point of 287 °C) as the solvent were blended and stirred well with, for example, a Disper to obtain a uniform solution. The content ratio of the dissipatable substance based on the weight of solid content of the precursor composition was 7 weight%.

14 weight parts of graphite (scaly graphite, Nippon Graphite Group, average particle size of 5 $\mu$m) were added into the obtained solution and uniformly dispersed therein with, for example, a bead mill. 1 weight part of p-toluenesulfonic acid as the curing agent was added into the obtained dispersion, which was further stirred and homogenized, and thereafter subjected to a defoaming treatment under reduced pressure to obtain a precursor composition. The precursor composition was filled into a mold having a diameter of 100 mm and a thickness of 30 mm and cured. The cured precursor composition was removed from the mold and heat-treated to a temperature of 1400 °C under a nitrogen gas atmosphere to obtain a glassy carbon shaped body having a diameter of 80 mm and a thickness of 25 mm.

The obtained glassy carbon shaped body, measured by an image analysis method via SEM, was a glassy carbon shaped body having a pore diameter of approximately 50 nm, a flexural strength of 96 MPa, a flexural modulus of 17.5 GPa, and an acoustic impedance of 4.4 Mrayl.

<<Example 3>>

80 weight parts of a furan resin (VF303, Hitachi Chemical Co., Ltd.) as the curable resin, 2 weight parts of polyethylene glycol (pyrolysis temperature of 426 °C) having a molecular weight of 20000 and 2 weight parts of polyethylene glycol (pyrolysis temperature of 390 °C) having a molecular weight of 600 as the pyrolytic organic substance, and 10 weight parts of benzyl alcohol (boiling point of 205 °C) and 10 weight parts of diethylene glycol (DEG) (boiling point of 244 °C) as the solvent were blended and stirred well with, for example, a Disper to obtain a uniform solution.

80 weight parts of a non-crystalline carbon powder (average particle size of 10 $\mu$m) were added into the obtained solution and uniformly dispersed therein with, for example, a bead mill or a Disper. 3 weight parts of p-toluenesulfonic acid as the curing agent were added into the obtained dispersion, which was further stirred and homogenized, and thereafter subjected to a defoaming treatment under reduced pressure to obtain a precursor composition. The precursor composition was filled into a mold having a diameter of 100 mm and a thickness of 30 mm and cured. The cured precursor composition was removed from the mold and heat-treated to a temperature of 1000 °C under a nitrogen gas atmosphere to obtain a glassy carbon shaped body having a diameter of 80 mm and a thickness of 25 mm.

The obtained glassy carbon shaped body, measured by an image analysis method via SEM, was a glassy carbon shaped body having a pore diameter of approximately 50 nm, a flexural strength of 115 MPa, a flexural modulus of 24 GPa, and an acoustic impedance of 5.3 Mrayl.

«Comparative Example 1»

120 weight parts of a furan resin (VF303, Hitachi Chemical Co., Ltd.) as the curable resin and 26 weight parts of benzyl alcohol (boiling point of 205 °C) and 40 weight parts of tetraethylene glycol (boiling point of 328 °C) as the solvent were blended and stirred well with, for example, a Disper to obtain a uniform solution.

1 weight part of p-toluenesulfonic acid as the curing agent was added into the obtained solution, which was further stirred and homogenized, and thereafter subjected to a defoaming treatment under reduced pressure to obtain a precursor composition. The precursor composition was filled into a mold having a diameter of 100 mm and a thickness of 30 mm and cured. When the cured precursor composition was removed from the mold and heat-treated to a temperature of 1400 °C under a nitrogen gas atmosphere, large cracks and fine interior cracks were formed, and a glassy carbon shaped body could not be obtained. Thus, the fine pore size, flexural strength, flexural modulus, and acoustic impedance could not be measured.

«Comparative Example 2»

70 weight parts of a furan resin (VF303, Hitachi Chemical Co., Ltd.) as the curable resin, 20 weight parts of polymethyl methacrylate (PMMA) (particle size of 5 $\mu$m, pyrolysis temperature of 400 °C) as the pyrolytic organic substance, and 10 weight parts of graphite (scaly graphite, Nippon Graphite Group, average particle size of 5 $\mu$m) as the carbonaceous powder were added into a bead mill or a Disper to be uniformly dispersed.

1 weight part of p-toluenesulfonic acid as the curing agent was added into the obtained dispersion, which was further stirred and homogenized, and thereafter subjected to a defoaming treatment under reduced pressure to obtain a precursor composition. The precursor composition was filled into a mold having a diameter of 100 mm and a thickness of 30 mm and cured. When the cured precursor composition was removed from the mold and heat-treated to a temperature of 1000 °C under a nitrogen gas atmosphere, cracks formed in the carbonized material, and a glassy carbon shaped body could not be obtained. Thus, the flexural strength, flexural modulus, and acoustic impedance could not be measured.

«Comparative Example 3»

126 weight parts of a furan resin (VF303, Hitachi Chemical Co., Ltd.) as the curable resin and 20 weight parts of Solfit (boiling point of 174 °C) and 30 weight parts of trimethylene glycol (boiling point of 287 °C) as the solvent were blended and stirred well with, for example, a Disper to obtain a uniform solution.
10 weight parts of graphite (scaly graphite, Nippon Graphite Group, average particle size of 5 $\mu$m) as the carbonaceous powder were added into the obtained solution and uniformly dispersed therein with, for example, a bead mill or a Disper. 1 weight part of p-toluenesulfonic acid as the curing agent was added into the obtained dispersion, which was further stirred and homogenized, and thereafter subjected to a defoaming treatment under reduced pressure to obtain a precursor composition. The precursor composition was filled into a mold having a diameter of 100 mm and a thickness of 30 mm and cured. When the cured precursor composition was removed from the mold and heat-treated to a temperature of 1000 °C under a nitrogen gas atmosphere, cracks formed in the carbonized material, and a glassy carbon shaped body could not be obtained. Thus, the flexural strength, flexural modulus, and acoustic impedance cannot be measured.
The composition and evaluation results of each of the Examples and Comparative Examples are shown in Table 1. In "Solution state" of Table 1, when a precursor composition before curing and before the addition of a carbonaceous powder was observed with an optical microscope at 100 times magnification or higher, "compatible" indicates the case where undissolved material could not be confirmed, and "incompatible" indicates otherwise.

[Table 1]

Table 1

| | | Example 1 | Example 2 | Example 3 | Comparative Example 1 | Comparative Example 2 | Comparative Example 3 |
|---|---|---|---|---|---|---|---|
| Curable resin | Type | furan resin | furan resin | furan resin | furan resin | furan resin | furan resin |
| | Weight (parts by weight) | 120 | 126 | 80 | 120 | 70 | 126 |
| Dissipatable substance | Type | PEG | PEG | PEG | - | PMMA | - |
| | Weight (parts by weight) | 14 | 10 | 4 | - | 20 | - |
| Solvent | Type | BA | Solfit | BA | BA | - | Solfit |
| | | TEG | TrEG | DEG | TEG | - | TrEG |
| | Weight (parts by weight) | 66 | 50 | 20 | 66 | - | 50 |
| Solution state | | compatible | compatible | compatible | compatible | incompatible | compatible |
| Carbonaceous powder | Type | - | graphite powder | non-crystalline carbon powder | - | graphite powder | graphite powder |
| | Weight (parts by weight) | - | 14 | 80 | - | 10 | 10 |
| Curing agent | Type | PTS | PTS | PTS | PTS | PTS | PTS |
| | Weight (parts by weight) | 2 | 1 | 3 | 1 | 1 | 1 |
| Thickness during mold filling (mm) | | 25 | 30 | 30 | 30 | 30 | 30 |
| Carbon plate thickness (mm) | | 20 | 25 | 25 | cracked | cracked | cracked |
| Acoustic impedance (Mrayl) | | 4.5 | 4.4 | 5.3 | - | - | - |
| Density (g/cm$^3$) | | 1.25 | 1.18 | 1.34 | - | - | - |
| Acoustic speed (m/sec) | | 3636 | 3741 | 4018 | - | - | - |
| Pore diameter (nm) | | about 50 | about 50 | about 50 | - | - | - |
| Flexural strength (MPa) | | 80 | 96 | 115 | - | - | - |

(continued)

| | Example 1 | Example 2 | Example 3 | Comparative Example 1 | Comparative Example 2 | Comparative Example 3 |
|---|---|---|---|---|---|---|
| Flexural modulus (GPa) | 19 | 17.5 | 24 | - | - | - |

In Examples 1 to 3, each of which used a precursor composition having a curable resin, a dissipatable substance, and a solvent compatibilized therein, glassy carbon shaped bodies having a thickness of 20 to 25 mm could be prepared.

On the other hand, in Comparative Examples 1 and 3, each of which are obtained by using a precursor composition not containing a dissipatable substance, and in Comparative Example 2, which are obtained by using a precursor composition not containing a solvent, glassy carbon shaped bodies having a thickness of 20 mm or more could not be prepared.

**Claims**

1.　A glassy carbon shaped body having:

   a maximum inscribed sphere diameter of 5 mm or more,
   pores having a diameter of 500 nm or less dispersed in the glassy carbon shaped body, and a density of 1.1 g/cm$^3$ or higher.

2.　The glassy carbon shaped body according to Claim 1, wherein it has an acoustic impedance of 2 to 6 Mrayl.

3.　The glassy carbon shaped body according to Claim 1 or 2, wherein the pores have a diameter within a range of more than 0 nm to 300 nm.

4.　The glassy carbon shaped body according to any one of Claims 1 to 3, wherein it further contains a carbonaceous powder dispersed in the glassy carbon shaped body.

5.　The glassy carbon shaped body according to any one of Claims 1 to 4, wherein it has a flexural strength of 50 to 250 MPa in accordance with JIS K 7074.

6.　The glassy carbon shaped body according to any one of Claims 1 to 5, wherein it has a flexural modulus of 10 to 35 GPa in accordance with JIS K 7074.

7.　A method for manufacturing the glassy carbon shaped body of any one of Claims 1 to 6, comprising

   compatibilizing a curable resin, a dissipatable substance, and a solvent by mixing to prepare a precursor composition, and
   heat-treating the precursor composition in a non-oxidizing atmosphere, whereby the curable resin is carbonized to form a main body of the glassy carbon shaped body and the dissipatable substance is dissipated to form the pores of the glassy carbon shaped body.

8.　The method for manufacturing a glassy carbon shaped body according to Claim 7, wherein a content ratio of the dissipatable substance based on the weight of solid content of the precursor composition is greater than 0 weight% to 30 weight%.

9.　The method for manufacturing a glassy carbon shaped body according to Claim 7 or 8, wherein the dissipatable substance has a pyrolysis temperature of 300 °C to 500 °C.

10.　The method for manufacturing a glassy carbon shaped body according to any one of Claims 7 to 9, wherein a carbonaceous powder is further contained in the precursor composition.

11.　The method for manufacturing a glassy carbon shaped body according to any one of Claims 7 to 10, wherein the solvent has a boiling point of 150 °C or higher.

<div align="center">

**INTERNATIONAL SEARCH REPORT**

</div>

| | International application No. |
|---|---|
| | PCT/JP2020/017255 |

**A.   CLASSIFICATION OF SUBJECT MATTER**
Int.Cl. C04B38/06(2006.01)i, C04B35/524(2006.01)i, C01B32/05(2017.01)i
FI: C04B35/524, C01B32/05, C04B38/06B

According to International Patent Classification (IPC) or to both national classification and IPC

**B.   FIELDS SEARCHED**

Minimum documentation searched (classification system followed by classification symbols)
Int.Cl. C04B38/00-C04B38/10, C04B35/00-C04B35/84, C01B32/05

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X<br>Y | JP 10-172738 A (TOKAI CARBON KK) 26.06.1998 (1998-06-26), claims, paragraph [0023], table 1 | 1, 3-8, 11<br>2, 9, 10 |
| Y | JP 2016-21737 A (MITSUBISHI PENCIL CO., LTD.) 04.02.2016 (2016-02-04), paragraph [0015] | 2 |
| Y | JP 2003-128475 A (MITSUBISHI PENCIL CO., LTD.) 08.05.2003 (2003-05-08), paragraph [0006] | 10 |
| X<br>Y | JP 11-71105 A (HITACHI CHEMICAL CO., LTD.) 16.03.1999 (1999-03-16), claims, paragraph [0020], table 1 | 1, 4-6<br>2 |
| Y | WO 2014/148303 A1 (TORAY INDUSTRIES, INC.) 25.09.2014 (2014-09-25), claims, paragraphs [0082], [0083] | 9 |

☐   Further documents are listed in the continuation of Box C.          ☒   See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 02.07.2020 | 14.07.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| INTERNATIONAL SEARCH REPORT | International application No. |
|---|---|
| Information on patent family members | PCT/JP2020/017255 |

```
JP 10-172738 A      26.06.1998    (Family: none)

JP 2016-21737 A     04.02.2016    US 2017/0125005 A1
                                  paragraph [0048]

JP 2003-128475 A    08.05.2003    US 2003/0077450 A1
                                  paragraph [0008]

JP 11-71105 A       16.03.1999    (Family: none)

WO 2014/148303 A1   25.09.2014    US 2016/0046491 A1
                                  claims, paragraphs [0103], [0104]
```

Form PCT/ISA/210 (patent family annex) (January 2015)

**REFERENCES CITED IN THE DESCRIPTION**

**Patent documents cited in the description**

- JP 2003128475 A
- JP 2003165784 A
- JP H10152310 B
- JP S6344684 A